# EUROPÄISCHE PATENTSCHRIFT

(11) **EP 3 184 334 B1**
(45) Veröffentlichungstag und Bekanntmachung des Hinweises auf die Patenterteilung: **27.02.2019**
(21) Anmeldenummer: 16199264.9
(22) Anmeldetag: 17.11.2016
(51) Int. Cl.: B60H 3/00, F24F 13/02, B60H 1/00, F24F 3/16

(54) **LUFTFÜHRUNGSANORDNUNG**
AIR GUIDANCE MOUNTING ASSEMBLY
ASSEMBLAGE D'UN SYSTÈME DE VENTILATION

(30) Priorität: 21.12.2015 DE 202015106952 U
(43) Veröffentlichungstag der Anmeldung: 28.06.2017
(73) Patentinhaber: REHAU AG + Co, 95111 Rehau (DE)
(72) Erfinder: Ahnert, Henry, 95126 Schwarzenbach/Saale (DE); Winterling, Stefan, 95182 Tauperlitz (DE)

(56) Entgegenhaltungen:
- WO-A1-2009/122734
- CN-A- 103 434 366
- US-B2- 7 824 477

## Beschreibung

Die vorliegende Erfindung betrifft eine Luftführungsanordnung für ein Kraftfahrzeug mit einem Luftführungskanal, wobei der Luftführungskanal eine Kanalwandung aufweist, die einen Hohlraum zur Leitung der Luft begrenzt, der zwischen wenigstens einer ersten Durchtrittsöffnung zum Eintritt von Luft und wenigstens einer zweiten Durchtrittsöffnung zum Austritt von Luft liegt, und wobei die Kanalwandung eine Außenseite und eine Innenseite aufweist, und mit wenigstens einer Vorrichtung zur Ionisation der geleiteten Luft, wobei die Vorrichtung wenigstens einen von der Vorrichtung abstehenden lonenerzeuger aufweist, wobei die Vorrichtung auf der Außenseite der Kanalwandung angeordnet ist und der lonenerzeuger durch eine Öffnung in der Kanalwandung in den Hohlraum hineinragt. Zur Erzeugung einer besseren Innenraumluft wird Luft aus der Klimaanlage eines Kraftfahrzeuges, bevor sie in den Innenraum gelangt, zunächst über eine Vorrichtung zur Ionisation - kurz einen lonisator -geleitet. Dieser erzeugt durch Hochspannung Sauerstoffionen. Die auf diese Weise ionisierte Luft soll Keime und flüchtige organische Verbindungen, aber auch Gerüche reduzieren.

Aus dem der Anmelderin bekannten Stand der Technik in Form von offenkundiger Vorbenutzung ist bekannt, derartige Vorrichtungen zur Ionisation der geleiteten Luft mittels einer Schraubverbindung mit dem Luftführungskanal zu verbinden. Neben dem durch die Schraubverbindung verursachten zusätzlichen Gewichts- und Materialkosten bedingt eine derartige Lösung insbesondere den Nachteil, dass die Montage der Vorrichtung auf dem Luftführungskanal relativ zeitaufwendig ist. Eine gattungsgemäße Luftführungsanordnung kann dem Dokument US 7,824,477 B2 entommen werden.

Die vorliegende Erfindung stellt sich daher die Aufgabe, eine Luftführungsanordnung für ein Kraftfahrzeug gemäß des Stands der Technik so auszugestalten, dass die Montage der Luftführungsanordnung deutlich vereinfacht ist.

Diese Aufgabe wird vorliegend erfindungsgemäß gelöst durch eine Luftführungsanordnung für ein Kraftfahrzeug, mit
- einem Luftführungskanal, wobei der Luftführungskanal eine Kanalwandung aufweist, die einen Hohlraum zur Leitung der Luft begrenzt, der zwischen wenigstens einer ersten Durchtrittsöffnung zum Eintritt von Luft und wenigstens einer zweiten Durchtrittsöffnung zum Austritt von Luft liegt, und wobei die Kanalwandung eine Außenseite und eine Innenseite aufweist, und mit
- wenigstens einer Vorrichtung zur Ionisation der geleiteten Luft, wobei die Vorrichtung wenigstens einen von der Vorrichtung abstehenden lonenerzeuger aufweist,
wobei die Vorrichtung auf der Außenseite der Kanalwandung angeordnet ist und der lonenerzeuger durch eine Öffnung in der Kanalwandung in den Hohlraum hineinragt, wobei die Vorrichtung eine Hakenaufnahme (z.B. eine Hakenöse) und ein Rastelement aufweist und, wobei die Kanalwandung einstückig ausgebildet und so ausgeformt ist, dass ein Teilbereich der Kanalwandung einen Haken und ein von dem ersten Teilbereich beabstandeter zweiter Teilbereich eine, einen Hinterschnitt aufweisende, Rastelementaufnahme bildet, wobei die Vorrichtung über die Hakenaufnahme und den Haken, sowie über das Rastelement und die Rastelementaufnahme mit dem Luftführungskanal verbunden ist. Die Montage einer derartigen Luftführungsanordnung ist deutlich vereinfacht, da zunächst der Haken des Luftführungskanals in der Hakenaufnahme der Vorrichtung eingehakt und die Vorrichtung, bzw. das Rastelement der Vorrichtung, um die so gebildete Achse in die Rastelementaufnahme des Luftführungskanals eingeschwenkt wird. Die Hakenöffnung weist bevorzugt von der Vorrichtung weg. Die erfindungsgemäße Ausbildung des Luftführungskanals der Luftführungsanordnung ermöglicht es zudem auftretende Fertigungstoleranzen der Vorrichtung bzw. des Luftführungskanals über die Rastelementaufnahme und/oder den Haken auszugleichen.
Ein weiterer Vorteil der erfindungsgemäßen Luftführungsanordnung ist, dass der Luftführungskanal auch für Varianten ohne eine Vorrichtung zur Ionisation gleich bleiben kann, da aufgrund der Ausformung der Rastelementaufnahme und des Hakens aus der Kanalwandung des Luftführungskanals für beide Varianten der gleiche Luftführungskanal verwendet werden kann, da es durch die Ausformungen nicht zu einer Gewichtserhöhung des Luftführungskanals kommt.

Der Luftführungskanal ist einstückig in einem Blasformverfahren oder in einem Thermoformverfahren hergestellt.

Die Vorrichtung kann auf ihrer dem Rastelement gegenüberliegenden Seite an einem aus der Wandung ausgeformten Gegenlager anliegen.
Die Vorrichtung kann eine Aussparung für einen Anschlag aufweisen, und der entsprechende Anschlag kann zusätzlich in dem zweiten Teilbereich ausgeformt sein.
Im Bereich der Öffnung kann zwischen der Vorrichtung und der Außenseite der Kanalwandung ein Dichtungselement vorgesehen sein. Durch das Dichtungselement wird verhindert, dass im verbundenen Zustand von Luftführungskanal und der Vorrichtung ungewollt Luft aus der Öffnung austreten kann. Das Dichtelement kann insbesondere einen Schaumstoff umfassen.

Das Rastelement kann eine Einführschräge aufweisen. Die Einführschräge erleichtert das Einführen des Rastelements in die Rastelementaufnahme, ohne das die Verbindungsfestigkeit zwischen Rastelement und Rastelementaufnahme beeinträchtigt wäre.

Der lonenerzeuger kann so an der Vorrichtung angeordnet sein, dass der Ionenerzeuger einen wenigstens dreifach so großen Abstand zu dem Rastelement aufweist als zu der Hakenaufnahme. Dies hat den Vorteil, dass bei dem vorstehend beschriebenen Einschwenken der Vorrichtung zum Verrasten von Rastelement und Rastelementaufnahme entlang der Drehachse von Haken und Hakenaufnahme der Ionenerzeuger möglichst kurz nach Einleiten der Drehbewegung bereits in die Öffnung der Wandung des Luftführungskanals eintaucht und so eine zusätzliche Zentrierung bei der Montage entsteht.

Bevorzugt besteht der Luftführungskanal aus einem thermoplastischen Material. Besonders bevorzugt umfasst das thermoplastische Material ein Polyamid oder ein Polyolefin, insbesondere ein Polyethylen hoher Dichte (PE-HD).

Der Luftführungskanal bzw. die Luftführungsanordnung ist bevorzugt Teil einer Klimaanlage eines Kraftfahrzeuges.

Im Folgenden wird die Erfindung anhand lediglich ein Ausführungsbeispiel darstellender Figuren näher erläutert. Gleiche oder funktionsgleiche Elemente sind mit den gleichen Bezugszeichen versehen.

Es zeigen:
- Fig. 1 und 2:: eine dreidimensionale Ansicht einer Luftführungsanordnung für ein Kraftfahrzeug mit einer auf der Außenseite angeordneten Vorrichtung;
- Fig. 3:: eine dreidimensionale Ansicht der Luftführung aus Fig. 1 und 2 ohne eine Vorrichtung;
- Fig. 4:: eine Querschnittsdarstellung der Luftführungsanordnung aus Fig. 1 und Fig. 2 während der Montage der Vorrichtung;
- Fig. 5:: eine Querschnittsdarstellung der Luftführungsanordnung gemäß Fig. 1 und 2 nach erfolgter Montage.

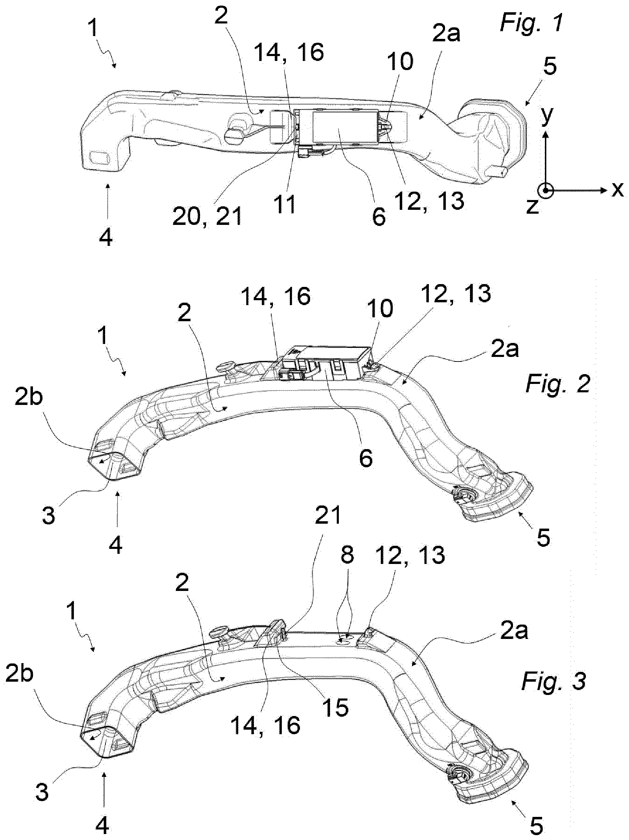

Die Fig. 1 und die Fig. 2 zeigen in einer dreidimensionalen Draufsichtsdarstellung eine Luftführungsanordnung für ein Kraftfahrzeug, mit
- einem Luftführungskanal 1, wobei der Luftführungskanal 1 eine Kanalwandung 2 aufweist, die einen Hohlraum 3 zur Leitung der Luft begrenzt, der zwischen wenigstens einer ersten Durchtrittsöffnung 4 zum Eintritt von Luft und wenigstens einer zweiten Durchtrittsöffnung 5 zum Austritt von Luft liegt, und wobei die Kanalwandung 2 eine Außenseite 2a und eine Innenseite 2b aufweist, und mit
- wenigstens einer Vorrichtung 6 zur Ionisation der geleiteten Luft, wobei die Vorrichtung 6 wenigstens einen von der Vorrichtung 6 abstehenden Ionenerzeuger 7 aufweist.

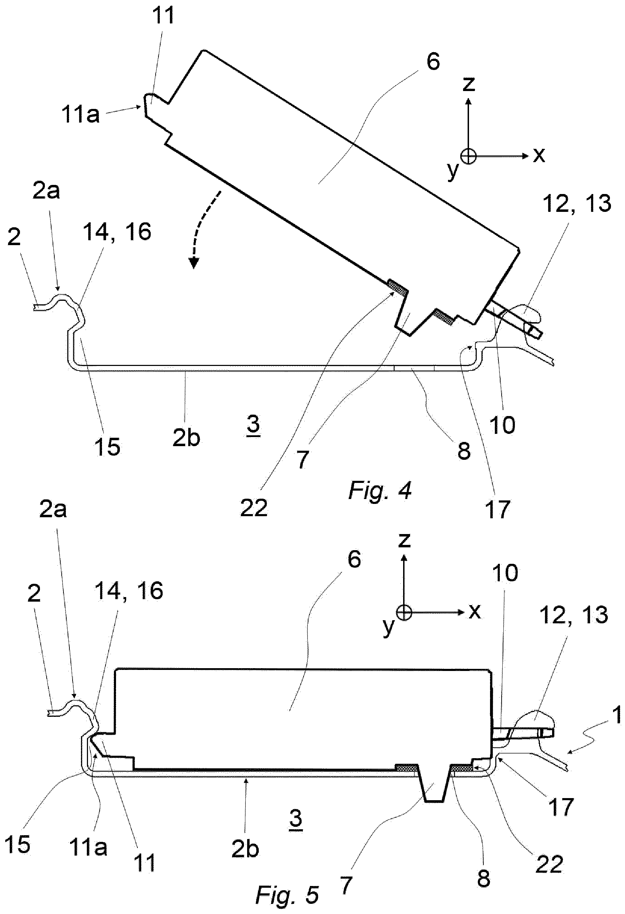

Die Vorrichtung 6 ist auf der Außenseite 2a der Kanalwandung 2 angeordnet und der Ionenerzeuger 7 ragt durch eine Öffnung 8 (vgl. Fig. 3) in der Kanalwandung 2 in den Hohlraum 3 hinein. Die Vorrichtung 6 weist eine Hakenaufnahme 10 in Gestalt einer Hakenöse auf. Zusätzlich weist die Vorrichtung 6 ein Rastelement 11 auf. Die Kanalwandung 2 ist einstückig ausgebildet und so ausgeformt, dass ein Teilbereich 12 der Kanalwandung 2 einen Haken 13 bildet. Ferner ist die Kanalwandung 2 so ausgeformt, dass ein von dem ersten Teilbereich 12 beabstandeter zweiter Teilbereich 14 eine, einen Hinterschnitt 15 aufweisende, Rastelementaufnahme 16 bildet. Die Vorrichtung 7 ist über die Hakenaufnahme 10 und den Haken 13, sowie über das Rastelement 11 und die Rastelementaufnahme 16 mit dem Luftführungskanal 1 verbunden. Der Luftführungskanal 1 ist einstückig in einem Blasformverfahren hergestellt. Alternativ kann der Luftführungskanal 1 auch in einem Thermoformverfahren hergestellt sein. Die Hakenöffnung des Hakens 13 weist von der Vorrichtung 6 weg. Die Vorrichtung 6 liegt auf ihrer dem Rastelement 11 gegenüberliegenden Seite an einem aus der Wandung 2 ausgeformten Gegenlager 17 an (vgl. Figuren 4 und 5). Die Vorrichtung 6 weist eine Aussparung 20 für einen Anschlag 21 auf. Der Anschlag 21 ist zusätzlich in dem zweiten Teilbereich 14 ausgeformt. D.h., dass in dem zweiten Teilbereich 14 der Luftführung 1 zusätzlich ein Anschlag 21 ausgeformt ist, der mit einer Aussparung 20 in der Vorrichtung 6 wechselwirkt. Der zusätzliche Anschlag 21 dient zur Fixierung der Vorrichtung 6 in einer Raumrichtung. In der Fig.1 ist ein entsprechendes Raumkoordinatensystem eingezeichnet. Der Anschlag dient in diesem Raumkoordinatensystem der Fixierung der Y-Raumrichtung. Die Z-Raumrichtung wird über den Haken bzw. die Hakenaufnahme, sowie das Rastelement bzw. das Rastgegenelement fixiert. Gleiches gilt für die X-Raumrichtung.

Im Bereich der Öffnung 8 ist zwischen der Vorrichtung 6 und der Außenseite 2a der Kanalwandung 2 ein Dichtungselement 22 vorgesehen (vgl. Fig. 4 und 5). In den Figuren 4 und 5 ist zu erkennen, dass das Rastelement eine Einführschräge 11a aufweist. Ebenfalls ist in diesen Figuren 4 und 5 zu erkennen, dass der Ionenerzeuger 7 so an der Vorrichtung 6 angeordnet ist, dass der Ionenerzeuger 7 einen wenigsten dreifach so großen Abstand zu dem Rastelement 11 aufweist als zu der Hakenaufnahme 10. In Fig. 4 ist ersichtlich, dass durch diese Anordnung des Ionenerzeugers 7 an der Vorrichtung 6 bei einer Einschwenkbewegung der Vorrichtung 6 entlang der Drehachse, gebildet durch den Haken 13 und die Hakenaufnahme 10, der Ionenerzeuger 7 während dieser Drehbewegung sehr früh in die Öffnung 8 eintaucht und so als Zentriervorrichtung für den Montagevorgang von Vorrichtung 6 und Luftführungskanal 1 dient. Der Luftführungskanal 1 besteht aus einem thermoplastischen Material. Das thermoplastische Material umfasst ein Polyolefin, insbesondere ein Polyethylen hoher Dichte (PE-HD). Der Luftführungskanal 1 bzw. die Luftführungsanordnung ist Teil einer Klimaanlage eines Kraftfahrzeuges.

In den Figuren 4 und 5 ist ebenfalls im Detail ersichtlich, dass die Vorrichtung 6 auf ihrer dem Rastelement 11 gegenüberliegenden Seite an einem aus der Wandung 2 ausgeformten Gegenlager 17 anliegt. Die gegenüberliegende Seite bildet mit dem Gegenlager 17 zusammen mit der Rastelementaufnahme 16 eine Fixierung der Vorrichtung 6 auf dem Luftführungskanal 1 in der X-Raumrichtung (vgl. Koordinatensystem in Fig. 4 und Fig. 5). Die Hakenöffnung des Hakens 13 weist von der Vorrichtung 6 weg.

## Patentansprüche

1. Luftführungsanordnung für ein Kraftfahrzeug, mit
- einem Luftführungskanal (1), wobei der Luftführungskanal (1) eine Kanalwandung (2) aufweist, die einen Hohlraum (3) zur Leitung der Luft begrenzt, der zwischen wenigstens einer ersten Durchtrittsöffnung (4) zum Eintritt von Luft und wenigstens einer zweiten Durchtrittsöffnung (5) zum Austritt von Luft liegt, und wobei die Kanalwandung (2) eine Außenseite (2a) und eine Innenseite (2b) aufweist, und mit
- wenigstens einer Vorrichtung (6) zur Ionisation der geleiteten Luft, wobei die Vorrichtung (6) wenigstens einen von der Vorrichtung (6) abstehenden Ionenerzeuger (7) aufweist,
wobei die Vorrichtung (6) auf der Außenseite (2a) der Kanalwandung (2) angeordnet ist und der Ionenerzeuger (7) durch eine Öffnung (8) in der Kanalwandung (2) in den Hohlraum (3) hineinragt,
**dadurch gekennzeichnet, dass**
die Vorrichtung (6) eine Hakenaufnahme (10) und ein Rastelement (11) aufweist und,
dass die Kanalwandung (2) einstückig ausgebildet und so ausgeformt ist, dass ein Teilbereich (12) der Kanalwandung (2) einen Haken (13) und ein von dem ersten Teilbereich (12) beabstandeter zweiter Teilbereich (14) eine, einen Hinterschnitt (15) aufweisende, Rastelementaufnahme (16) bildet,
wobei der Luftführungskanal (1) einstückig in einem Blasformverfahren oder in einem Thermoformverfahren hergestellt ist,
wobei die Vorrichtung (7) über die Hakenaufnahme (10) und den Haken (13), sowie über das Rastelement (11) und die Rastelementaufnahme (16) mit dem Luftführungskanal (1) verbunden ist,
sodass der Luftführungskanal (1) auch für Varianten ohne eine Vorrichtung (6) zur Ionisation gleich bleiben kann, da aufgrund der Ausformung der Rastelementaufnahme (16) und des Hakens (13) aus der Kanalwandung (2) des Luftführungskanals (1) für beide Varianten der gleiche Luftführungskanal (1) verwendet werden kann, da es durch die Ausformungen nicht zu einer Gewichtserhöhung des Luftführungskanals (1) kommt.

2. Luftführungsanordnung nach Anspruch 1, **dadurch gekennzeichnet, dass** die Vorrichtung (6) auf ihrer dem Rastelement (11) gegenüberliegenden Seite an einem aus der Wandung (2) ausgeformten Gegenlager (17) anliegt.

3. Luftführungsanordnung nach einem der vorstehenden Ansprüche, **dadurch gekennzeichnet, dass** die Vorrichtung (6) eine Aussparung (20) für einen Anschlag (21) aufweist, und der Anschlag (21) zusätzlich in dem zweiten Teilbereich (14) ausgeformt ist.

4. Luftführungsanordnung nach einem der vorstehenden Ansprüche, **dadurch gekennzeichnet, dass** im Bereich der Öffnung (8) zwischen der Vorrichtung (6) und der Außenseite (2a) der Kanalwandung (2) ein Dichtungselement (22) vorgesehen ist.

5. Luftführungsanordnung nach einem der vorstehenden Ansprüche, **dadurch gekennzeichnet, dass** das Rastelement (11) eine Einführschräge (11a) aufweist.

6. Luftführungsanordnung nach einem der vorstehenden Ansprüche, **dadurch gekennzeichnet, dass** der Ionenerzeuger (7) so an der Vorrichtung (6) angeordnet ist, dass der Ionenerzeuger (7) einen wenigstens dreifach so großen Abstand zu dem Rastelement (11) aufweist als zu der Hakenaufnahme (10).

7. Luftführungsanordnung nach einem der vorstehenden Ansprüche, **dadurch gekennzeichnet, dass** der Luftführungskanal (1) aus einem thermoplastischen Material besteht.

8. Luftführungsanordnung nach Anspruch 8, **dadurch gekennzeichnet, dass** das thermoplastische Material ein Polyamid oder ein Polyolefin, insbesondere PE-HD umfasst.

## Claims

1. An air guidance arrangement for a motor vehicle, with
- an air guidance duct (1), wherein the air guidance duct (1) has a duct wall (2) which delimits a cavity (3) for conducting the air, which cavity is located between at least a first passage opening (4) for air to enter and at least a second passage opening (5) for air to exit, and wherein the duct wall (2) has an outer side (2a) and an inner side (2b), and with
- at least one device (6) for ionising the directed air, wherein the device (6) comprises at least one ion generator (7) which protrudes from the device (6),
wherein the device (6) is arranged on the outer side (2a) of the duct wall (2) and the ion generator (7) projects through an opening (8) in the duct wall (2) into the cavity (3),
**characterised in that**
the device (6) comprises a hook receptacle (10) and a latching element (11), and
**in that** the duct wall (2) is designed in one piece and is formed such that a partial region (12) of the duct wall (2) forms a hook (13) and a second partial region (14) which is spaced apart from the first partial region (12) forms a latching-element receptacle (16) which comprises an undercut (15),
wherein the air guidance duct (1) is produced in one piece in a blow forming process or in a thermoforming process,
wherein the device (7) is connected to the air guidance duct (1) by means of the hook receptacle (10) and the hook (13), and also by means of the latching element (11) and the latching-element receptacle (16),
so that the air guidance duct (1) can remain the same even for variants without an ionisation device (6), since the same air guidance duct (1) can be used for both variants due to the latching-element receptacle (16) and the hook (13) being formed from the duct wall (2) of the air guidance duct (1), since owing to the formed portions no increase in the weight of the air guidance duct (1) occurs.

2. An air guidance arrangement according to Claim 1, **characterised in that** the device (6) on its side located opposite the latching element (11) rests against a counterbearing (17) which is formed from the wall (2).

3. An air guidance arrangement according to one of the preceding claims, **characterised in that** the device (6) comprises a cutout (20) for a stop (21), and the stop (21) is formed additionally in the second partial region (14).

4. An air guidance arrangement according to one of the preceding claims, **characterised in that** a sealing element (22) is provided in the region of the opening (8) between the device (6) and the outer side (2a) of the duct wall (2).

5. An air guidance arrangement according to one of the preceding claims, **characterised in that** the latching element (11) comprises an insertion slope (11a).

6. An air guidance arrangement according to one of the preceding claims, **characterised in that** the ion generator (7) is arranged on the device (6) such that the ion generator (7) is has a distance at least three times as large to the latching element (11) as to the hook receptacle (10).

7. An air guidance arrangement according to one of the preceding claims, **characterised in that** the air guidance duct (1) consists of a thermoplastic material.

8. An air guidance arrangement according to Claim 8, **characterised in that** the thermoplastic material comprises a polyamide or a polyolefin, in particular HDPE.

## Revendications

1. Ensemble de guidage d'air pour un véhicule automobile, comprenant
- un conduit de guidage d'air (1), le conduit de guidage d'air (1) présentant une paroi de conduit (2) qui délimite un espace vide (3) destiné au diriger l'air, qui se trouve entre au moins un premier orifice de passage (4) pour l'entrée de l'air et au moins un second orifice de passage (5) pour la sortie de l'air, et la paroi de conduit (2) présentant un côté extérieur (2a) et un côté intérieur (2b), et comprenant
- au moins un dispositif (6) destiné à l'ionisation de l'air dirigé, le dispositif (6) présentant au moins un générateur d'ions (7) dépassant du dispositif (6),
le dispositif (6) étant disposé sur le côté extérieur (2a) de la paroi de conduit (2) et le générateur d'ions (7) dépassant dans l'espace vide (3) par un orifice (8) dans la paroi de conduit (2),
**caractérisé en ce que**
le dispositif (6) présente un logement pour crochet (10) et un élément d'enclenchement (11) et
**en ce que** la paroi de conduit (2) est réalisée d'un seul tenant et formée de telle manière qu'une partie (12) de la paroi de conduit (2) forme un crochet (13) et une seconde partie (14) espacée de la première partie (12) forme un logement d'élément d'enclenchement (16) présentant une contre-dépouille (15),
le conduit de guidage d'air (1) étant fabriqué d'un seul tenant selon un procédé de moulage par soufflage ou selon un procédé de thermoformage, le dispositif (7) étant relié au conduit de guidage d'air (1) par le biais du logement pour crochet (10) et du crochet (13) ainsi que par le biais de l'élément d'enclenchement (11) et du logement d'élément d'enclenchement (16),
de telle sorte que le conduit de guidage d'air (1) peut rester identique même pour des variantes sans dispositif (6) d'ionisation, car, en raison du formage du logement d'élément d'enclenchement (16) et du crochet (13) à partir de la paroi de conduit (2) du conduit de guidage d'air (1), le même conduit de guidage d'air (1) peut être utilisé pour les deux variantes puisque le formage n'entraîne pas l'augmentation du poids du conduit de guidage d'air (1).

2. Ensemble de guidage d'air selon la revendication 1, **caractérisé en ce que** le dispositif (6) appuie de son côté opposé à l'élément d'enclenchement (11) contre un contre-appui (17) formé à partir de la paroi (2).

3. Ensemble de guidage d'air selon l'une des revendications précédentes, **caractérisé en ce que** le dispositif (6) présente un évidement (20) pour une butée (21), et la butée (21) est formée en plus dans la seconde partie (14).

4. Ensemble de guidage d'air selon l'une des revendications précédentes, **caractérisé en ce qu'**un élément d'étanchéité (22) est prévu dans la zone de l'orifice (8) entre le dispositif (6) et le côté extérieur (2a) de la paroi de conduit (2).

5. Ensemble de guidage d'air selon l'une des revendications précédentes, **caractérisé en ce que** l'élément d'enclenchement (11) présente un biseau d'insertion (11a).

6. Ensemble de guidage d'air selon l'une des revendications précédentes, **caractérisé en ce que** le générateur d'ions (7) est disposé sur le dispositif (6) de telle manière que le générateur d'ions (7) présente une distance avec l'élément d'enclenchement (11) au moins trois fois supérieure à celle avec le logement pour crochet (10).

7. Ensemble de guidage d'air selon l'une des revendications précédentes, **caractérisé en ce que** le conduit de guidage d'air (1) est constitué d'un matériau thermoplastique.

8. Ensemble de guidage d'air selon la revendication 8, **caractérisé en ce que** le matériau thermoplastique comprend un polyamide ou une polyoléfine, en particulier du PE-HD.
